# EUROPEAN PATENT SPECIFICATION

(11) **EP 1 977 805 B1**
(45) Date of publication and mention of the grant of the patent: **04.11.2015**
(21) Application number: 07006611.3
(22) Date of filing: 29.03.2007
(51) Int. Cl.: B01D 3/38, B01D 3/42, C01B 21/14, B01D 3/14

(54) **Method and use of a device for stripping organic contaminants**
Verfahren und Verwendung einer Vorrichtung zum Ablösen von organischen Schadstoffen
Procédé et utilisation d' un dispositif pour extraire des contaminants organiques

(43) Date of publication of application: 08.10.2008
(73) Proprietor: China Petrochemical Development Corporation, Taipei City (TW)
(72) Inventor: Yang, Shu-Hung, Taipei City (TW); Luo, Shou-Li, Taipei City (TW)
(74) Representative: Epping - Hermann - Fischer

(56) References cited:
- EP-A- 1 266 679
- FR-A- 2 765 809
- GB-A- 1 241 190
- US-A- 2 358 272
- US-A- 2 384 511
- US-A- 4 933 484
- US-A1- 2005 065 375

## Description

### FIELD OF THE INVENTION

The present invention relates to the use of a steam stripping devices for inorganic processing solution to a steam stripping method for an inorganic processing solution used in a recycling system for producing hydroxylamine oxime.

### BACKGROUND OF THE INVENTION

Caprolactam is an important starting material for producing polyamide (also referred to as nylon). Currently, a commercial process for preparing caprolactam involves generating cyclohexanone oxime in a hydroxylamine-oxime recycling system, and then subjecting the oxime to the Beckmann rearrangement to yield caprolactam. In a hydroxylamine-oxime recycling system, the reaction performance of hydroxylamine synthesis depends on the degree of clearness of the inorganic processing solution used. After oxime reaction, the inorganic processing solution contains organics, such as carboxylic acids, alcohols, aldehydes, ketones, esters, ethers, hydrocarbons, and the like. Typically, most of the product and other organics can be separated from the solution by extraction. However, the extracted solution still contains a trace of undesired organics. If such an inorganic processing solution with trace organics is recycled into a reaction zone of hydroxylamine synthesis, the catalysts in the reaction zone will be poisoned. Therefore, the undesired organics in the inorganic processing solution are subject to organic contaminants. Usually, the inorganic processing solution after oxime reaction is firstly extracted, so as to remove most of the product and other organics before entering the reaction zone, and then stripped with steam to eliminate residual organic contaminants.

In a hydroxylamine-oxime recycling system, steam stripping is mainly used for the purpose of evaporating excess water in the recycling system, thereby controlling the content of water in the whole system. Additionally, a trace of organic contaminants remained in the inorganic processing solution, such as cyclohexanone, cyclohexanone oxime and toluene, can also be eliminated by steam stripping, wherein cyclohexanone oxime can be hydrolyzed into cyclohexanone and hydroxylamine.

Referring to FIG. 1, a schematic view of a prior steam stripping device is shown (see eg document US 2005/0065375 A1).

It comprises a steam stripping tower A and a reboiler B for heating the inorganic processing solution. In the hydroxylamine-oxime recycling system, the inorganic processing solution after oxime reaction is firstly extracted (not shown) with organic solvents, such as toluene, so as to eliminate most of the product of cyclohexanone-oxime unreacted cyclohexanone and other organics, such as carboxylic acids, alcohols, aldehydes, ketones, esters, ethers, hydrocarbons, and the like. After that, the extracted inorganic processing solution is introduced into the steam stripping tower A through a pipe 10, then led into a reboiler B through a pipe 12, and delivered back to the steam stripping tower A through a pipe 14. Steam is introduced into the reboiler B through a pipe 20, passing through a control valve 100, to heat the inorganic processing solution. Excess water and organics are discharged form a pipe 16 at the top of steam stripping tower A, and the stripped inorganic processing solution flows out from a pipe 18 at the bottom of the steam stripping tower A.

Ideally, a corresponding steam condition to each steam stripping device should be provided, that is, one heat exchanger should be equipped with one suitable boiler or steam supply system. However, when the costs and efficiency are considered, it is very often to use only one main steam supply system in the entire factory. That is, only one main boiler is used for the whole factory to distribute steam to each unit of the factory through pipes and control valves according to the requirements of temperature, pressure and consumption. The flow of steam into each unit is controlled by the control valve. However, the steam of reduced pressure caused by passing through the control valve is always superheated. Because making the performance of heat transfer of the superheated steam is only about one tenth of that for the saturated steam, it adversely affects the heat exchanging efficiency in the heat exchanging unit. Additionally, the use of superheated steam to heat the inorganic processing solution containing a trace of organic contaminants will cause partially superheating and has several disadvantages. For example, due to the high temperature, organic contaminants such as ketones and alcohols, will react to form compounds with higher molecular weight and result in the decrease of product yield; crystallization and blocking of the heat exchanging devices and pipes by the discharged basic solution, and the color-change of processing inorganic solution at high temperature, etc.

However, it would be desirable to provide a steam stripping device for preventing degradation of inorganic processing solution due to superheating.

### SUMMARY OF THE INVENTION

To overcome the above-mentioned problems of the prior art, it is an object of this invention to provide a method according to claim 1 for removing organic contaminants from an inorganic processing solution comprising the step of subjecting the inorganic processing solution containing the organic contaminants to a steam stripping device for inorganic processing solution that can prevent deterioration and degradation of the inorganic processing solution due to superheating.

Another object of this invention is to provide a use of a steam stripping device for an inorganic processing solution that can remove organic contaminants efficiently.

To achieve the aforementioned and other objects, a use of a steam stripping device for inorganic processing solution is provided, comprising a steam stripping unit for steam stripping the inorganic processing solution, wherein the steam stripped inorganic processing solution flows out from the bottom of the steam stripping unit and undesired organics are expelled from the top of steam stripping unit; a heat exchanging unit coupled to the steam stripping unit, for heating the inorganic processing solution introduced into the steam stripping unit by means of a steam fed into the heat exchanging unit; and a desuperheating unit which is used for reducing by spraying a cooling liquid through a nozzle in order to reduce a temperature of the steam when overheated before the steam is fed into the heat exchanging unit, the cooling liquid passes through an inlet block valve, a Y filter, a flow indicator, a block valve, a pressure indicator, a block valve, and an outlet valve included in the desuperheating unit and wherein the desuperheating unit is disposed at the steam inlet of the heat exchanging unit and the outlet valve is connected to a pipe branching off from the pipe connecting the inlet block valve and the Y filter, in order to obtain a stripped inorganic processing solution, and thereafter reusing the stripped inorganic processing solution, wherein the inorganic processing solution is used in a recycling system for producing hydroxylamine-oxime. This device is used for steam stripping of the inorganic processing solution in a hydroxyl-oxime recycling system, thereby removing organic contaminants in the inorganic processing solution. By the provision of a desuperheating unit in the steam stripping device used in this invention, the adverse influence of inorganic processing solution caused by partially superheating during steam stripping can be avoided, and organic contaminants can be removed from the inorganic processing solution efficiently. Moreover, as mentioned before, superheated steam has a relatively inferior performance of heat transfer than that of saturated steam by 10 times, which seriously influence the efficiency of heat exchange in the heat exchanging unit. The steam stripping device can efficiently avoid superheated steam to enter the heat exchange unit. Since the coefficient of heat transfer can be significantly enhanced, it can increase the efficiency of steam stripping capacity of the process.

### BRIEFE DESCRIPTION OF THE DRAWINGS

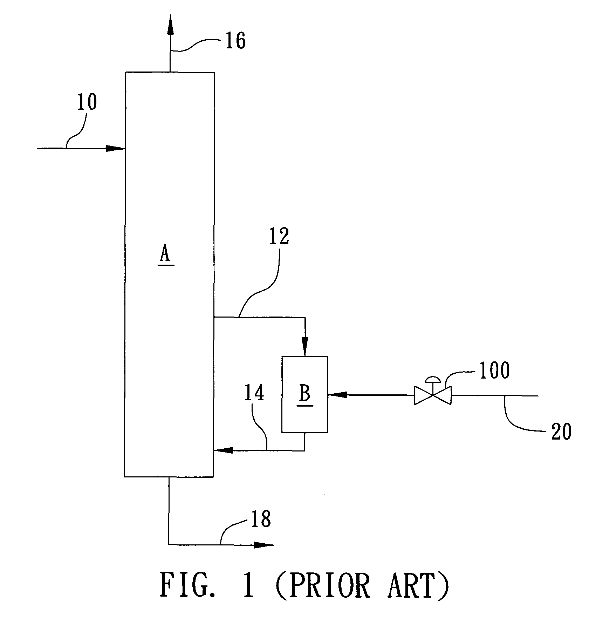

FIG. 1 is a schematic view of a prior steam stripping device;
FIG. 2 is a schematic view of the steam stripping device used in an embodiment of the present invention; and
FIG. 3 is a schematic view of interior elements of the desuperheating unit according to the present invention.

### DETAILED DESCRIPTION OF THE PREFERED EMBODIMENTS

The following illustrative embodiments are provided to illustrate the disclosures of the present invention. These and other advantages and effects can be apparently understood by those skilled in the art after reading this specification. The present invention can also be performed or applied by other different embodiments. The details of the specification may be modified and varied on the basis of different points and applications without departing from the spirit of the present invention.

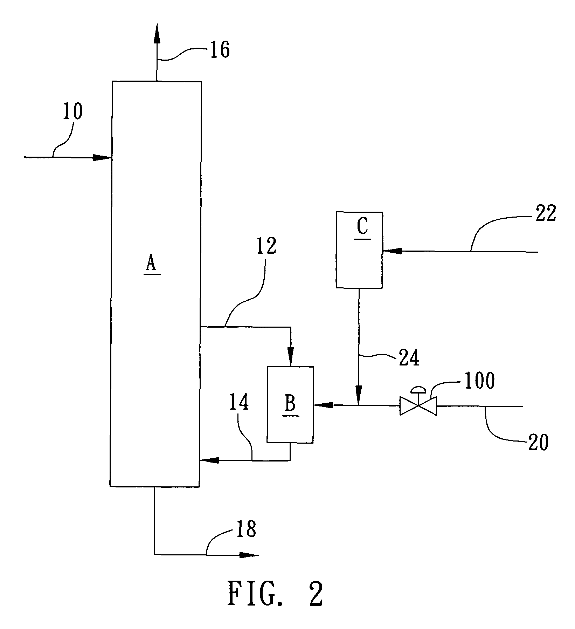

FIG. 2 is a schematic view of the steam stripping device for an inorganic processing solution used in an embodiment of the present invention. The steam stripping device is composed of a steam stripping unit, such as steam stripping tower A; a heat exchanging unit for heating the inorganic processing solution by means of a steam fed into the heat exchanging unit, such as reboiler B; and a desuperheating unit for lowering by cooling liquid the temperature of superheated steam (preferably, the temperature is lowered to the level of saturation) before the steam is fed into the heat exchanging unit, such as desuperheating apparatus C. In this embodiment, the steam stripping device and efficacy thereof are illustrated by using phosphate inorganic processing solution in the hydroxylamine-oxime recycling system.

Firstly, in the hydroxylamine-oxime recycling system, after the formation of cyclohexanone-oxime, the phosphate inorganic processing solution is isolated and introduced into the steam stripping tower A through a pipe 10. The inorganic processing solution contains phosphate salts, hydroxylamine, water, and organics. The organics includes ketones such as cyclohexanone; ketone oximes, such as cychohexanone oxime; carboxylic acids; alcohols; aldehydes; esters; amines; and hydrocarbons such as toluene, etc.

Secondly, the inorganic processing solution in the steam stripping tower A is introduced into the reboiler B through a pipe 12 for heating, and then reintroduced into steam stripping tower A through a pipe 14. During the process of steam stripping, excess water and undesired organics are expelled from the top of the steam stripping tower A through a pipe 16. Among those, the expelled organics are recovered by cooling. The inorganic processing solution stripped with steam to remove excess water and organic contaminants then flows out from the bottom of the steam stripping tower A through a pipe 18. Subsequently, the composition of the solution is adjusted according to requirement. For example, the solution is delivered to a nitric acid absorbing tower for supplementing nitrate ions so as to carry out the following hydroxylamine synthesis.

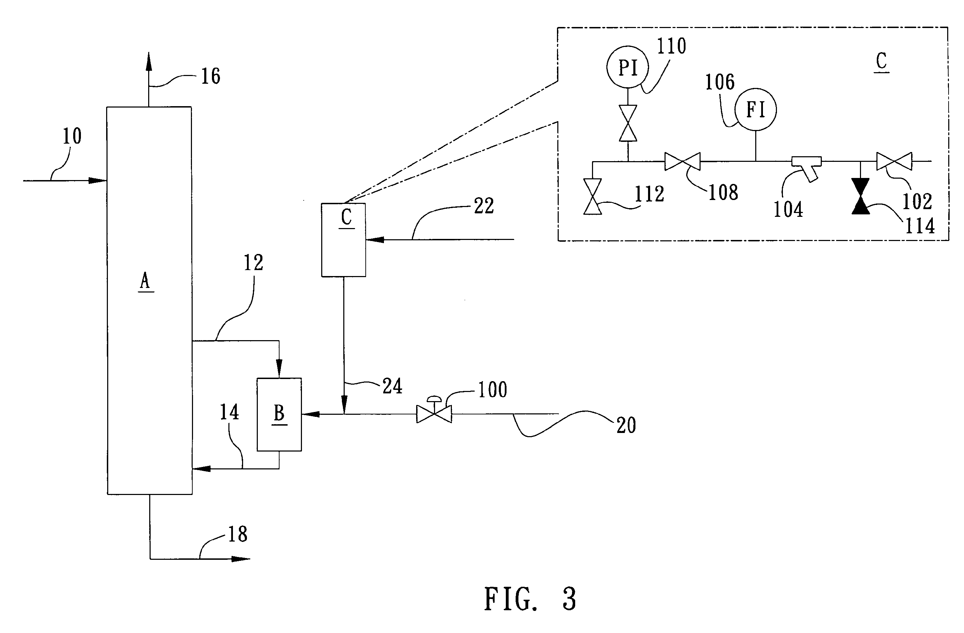

The steam used in this steam stripping device is introduced into reboiler B through a pipe 20, thereby heating the inorganic processing solution. Generally, the steam is supplied by a single steam-electricity cogeneration plant in the factory. The steam may be of high pressure steam, middle pressure steam, or low pressure steam, which is not designed according to the required condition of a particular device. Meanwhile the flow of steam is regulated by a control valve 100 to be led into reboiler B. Since the steam is easily overheated during transmission in the present invention, a desuperheating unit C is disposed at the steam inlet of the reboiler B. Cooling liquid, such as boiler feed water, is introduced into the desuperheating unit C through a pipe 22 to lower the temperature of the superheated steam by spraying through a pipe 24. Successively, the cooled steam is introduced into reboiler B so as to prevent adverse influence on the inorganic processing solution caused by superheated steam. FIG. 3 further describes the interior elements of the desuperheating unit. The desuperheating unit C comprises an inlet block valve 102, a Y filter 104, a flow indicator 106, a block valve 108, a pressure indicator 110, a block valve 112, and an outlet valve 114. In this embodiment, the boiler feed water is used as a cooling liquid. The boiler feed water flows into the desuperheating unit C through the pipe 22, passing through the inlet block valve 102. Then, the boiler feed water passes through Y filter 104 and impurities are filtered. After successively passing through the flow indicator 106, block valve 108, pressure indicator 110, and block 112, the cooling water is sprayed through the nozzle of the desuperheating unit to lower the temperature of superheated steam and then the cooled steam is introduced into the reboiler B.

In the steam stripping device for an inorganic processing solution used in the present invention, the desuperheating unit disposed at the steam inlet of the reboiler is used to lower the temperature of superheated steam by spraying water when the temperature of the introduced steam becomes too high. After the temperature is lowered, the steam is reintroduced into the reboiler. Thereby, thermal decomposition of organics into other organic compounds, such as organic acids, cyclic compounds, and carbon complexes, in the inorganic processing solution can be avoided. Furthermore, the organic contaminants can also be efficiently removed. In this embodiment, the total carbon content in the steam stripped phosphate inorganic processing solution used in the hydroxylamine-oxime recycling system, based on the total amount of phosphate inorganic processing solution, is preferably not more than 0.03wt% (300 ppm), preferably not more than 0.02wt% (200 ppm), further more preferably not more than 0.015wt% (150ppm), and most preferably not more than 0.01 wt% (100ppm); the total amount of cyclohexanone and cyclohexanone-oxime together preferably not more than 0.001wt% (10ppm), more preferably not more than 0.0005wt% (5ppm), further more preferably not more than 0.0003wt% (3ppm), and most preferably not more than 0.0002wt% (2ppm).

Additionally, the steam stripping device used in the present invention can prevent the denature of inorganic processing solution due to superheating.

Accordingly, when the steam stripping device is applied to hydroxylamine-oxime recycling system, not only the efficiency of removing organic contaminants can be enhanced, but also can prevent the denature of inorganic processing solution. Thereby, it can prevent the decreases of catalyst activity and selectivity of hydroxylamine production in the hydroxylamine synthese.

### EXAMPLES

### Example 1

The phosphate inorganic processing solution, after conducting oxime reaction to form cyclohexanone oxime in a hydroxylamine-oxime recycling system and being isolated by extraction, was used. Total carbon, amount of cyclohexanone and cyclohexanone-oxime, and amount of toluene in the solution were analyzed. The results obtained are shown in Table 1.

The phosphate inorganic processing solution was stripped with low pressure steam having 5kg/cm² (at 161°C) under conditions of atmospheric pressure and 110°C in the steam stripping device used in the present invention. When steam stripping was completed, total carbon, amount of cyclohexanone and cyclohexanone oxime, and amount of toluene in the solution were measured. The results are shown in Table 1.

**Table 1**

| organics in the inorganic processing solution | | | |
|---|---|---|---|
| | total carbon (ppm) | cyclohexanone and cyclohexanone- oxime (ppm) | toluene (ppm) |
| before steam stripping | 365 | 123 | 265 |
| after steam stripping | 103 | 0.5 | 0 |
| removal of organics | 71.8% | 99.6% | 100% |

### Comparative example 1

The procedures of Example 1 were repeated except that a steam stripping tower without a desuperheating unit was used. The results obtained are shown in Table 2.

**Table 2**

| organics in the inorganic processing solution | | | |
|---|---|---|---|
| | total carbons(ppm) | cyclohexanone and cyclohexanone- oxime (ppm) | toluene (ppm) |
| before steam stripping | 358 | 115 | 260 |
| after steam stripping | 126 | 2.2 | 0 |
| Removal of organics | 64.8% | 98.1% | 100% |

## Claims

1. A method for removing organic contaminants from an inorganic processing solution, comprising the step of subjecting the inorganic processing solution containing the organic contaminants to a steam stripping device for an inorganic processing solution, comprising:
a steam stripping unit (A) for steam stripping the inorganic processing solution, wherein the steam stripped inorganic processing solution flows out from the bottom of the steam stripping unit and undesired organics are
expelled from the top of the steam stripping unit; a heat exchanging unit (B) coupled to the steam stripping unit (A), the heat exchanging unit being used for heating the inorganic processing solution introduced into the steam stripping unit by means of a steam fed into the heat exchanging unit; and
a desuperheating unit (C) which is used for spraying a cooling liquid through a nozzle in order to reduce the temperature of the steam when overheated before the steam is fed into the heat exchanging unit, the cooling liquid passes through an inlet block valve (102), a Y filter (104), a flow indicator (106), a block valve (108), a pressure indicator (110), a block valve (112), and an outlet valve (114) included in the desuperheating unit (C) and wherein the desuperheating unit (C) is disposed at the steam inlet of the heat exchanging unit (B) and the outlet valve (114) is connected to a pipe branching off from the pipe connecting the inlet block valve (102) and the Y filter (104),
in order to obtain a stripped inorganic processing solution, and thereafter reusing the stripped inorganic processing solution, wherein the inorganic processing solution is used in a recycling system for producing hydroxylamine-oxime.

2. The method according to claim 1, wherein the steam stripping unit is a steam stripping tower.

3. The method according to any of the claims 1 or 2, wherein the heat exchanging unit is a reboiler.

4. The method according to claim 3, wherein the steam is introduced into the reboiler through a first pipe, and the desuperheating unit is connected via a second pipe to the first pipe.

5. The method according to any of the claims 1 to 4, wherein the organic contaminants comprise ketones, ketoximes, carboxylic acids, alcohols, aldehydes, esters, amines and hydrocarbons.

6. The method according to any of the claims 1 to 5, wherein the inorganic processing solution contains phosphate salts, hydroxylamine and water.

7. The method according to any of the claims 1 to 6, wherein the total carbon content in the steam stripped inorganic processing solution used in the hydroxylamine-oxime recycling system, based on the total amount of phosphate inorganic processing solution, is not more than 0.03wt% (300 ppm).

8. A use of a steam stripping device for an inorganic processing solution, comprising:
a steam stripping unit (A) for steam stripping the inorganic processing solution , wherein the steam stripped inorganic processing solution flows out from the bottom of the steam stripping unit and undesired organics are expelled from the top of the steam stripping unit;
a heat exchanging unit (B) coupled to the steam stripping unit, the heat exchanging unit (B) being used for heating the inorganic processing solution introduced into the steam stripping unit (A) by means of a steam fed into the heat exchanging unit; and
a desuperheating unit (C) which is used for spraying a cooling liquid through a nozzle to reduce a temperature of the steam when overheated before the steam is fed into the heat exchanging unit (B), an inlet block valve (102), a Y filter (104), a flow indicator (106), a block valve (108), a pressure indicator (110), a block valve (112), and an outlet valve (114) included in the desuperheating unit for passing through the cooling liquid, and wherein the desuperheating unit (C) is disposed at the steam inlet of the heat exchanging unit and the outlet valve (114) is connected to a pipe branching off from the pipe connecting the inlet block valve (102) and the Y filter (104),
for removing organic contaminants from an inorganic processing solution to be used in a recycling system for producing hydroxylamine-oxime.

## Patentansprüche

1. Verfahren zur Entfernung organischer Verunreinigungen aus einer anorganischen Verarbeitungslösung, umfassend den Schritt des Unterwerfens der anorganischen Verarbeitungslösung, die die organischen Verunreinigungen enthält, einer Dampfstrippvorrichtung für eine anorganische Verarbeitungslösung, umfassend:
eine Damfstrippanlage (A) zum Damfstrippen der anorganischen Verarbeitungslösung, wobei die dampfgestrippte anorganische Verarbeitungslösung aus dem Boden der Damfstrippanlage strömt und unerwünschte organische Substanzen oben aus der Damfstrippanlage ausgestoßen werden;
eine Wärmeaustauschanlage (B), die mit der Damfstrippanlage (A) verbunden ist, wobei die Wärmeaustauschanlage zum Erwärmen der anorganischen Verarbeitungslösung verwendet wird, die in die Damfstrippanlage durch einen Dampf eingeführt wird, der in die Wärmeaustauschanlage eingespeist wird; und
eine Entüberhitzungsanlage (C), die zum Sprühen einer Kühlflüssigkeit durch eine Düse verwendet wird, um die Temperatur des Dampfs, wenn er überhitzt wird, zu reduzieren, bevor der Dampf in die Wärmeaustauschanlage eingespeist wird, wobei die Kühlflüssigkeit durch ein Einlassblockventil (102), ein Y-Filter (104), einen Strömungsanzeiger (106), ein Blockventil (108), einen Druckanzeiger (110), ein Blockventil (112) und ein Auslassventil (114), das in der Entüberhitzungsanlage (C) enthalten ist, hindurchgeht und wobei die Entüberhitzungsanlage (C) am Dampfeinlass der
Wärmeaustauschanlage (B) angeordnet ist und das Auslassventil (114) mit einem Rohr verbunden ist, das von dem Rohr abzweigt, das das Einlassblockventil (102) und das Y-Filter (104) verbindet,
um eine gestrippte anorganische Verarbeitungslösung zu erhalten, und daraufhin des Wiederverwendens der gestrippten anorganischen Verarbeitungslösung, wobei die anorganische Verarbeitungslösung in einem Rückführsystem zum Herstellen von Hydroxylamin-Oxim verwendet wird.

2. Verfahren nach Anspruch 1, wobei die Dampfstrippanlage ein Dampfstrippturm ist.

3. Verfahren nach einem der Ansprüche 1 oder 2, wobei die Wärmeaustauschanlage ein Aufwärmer ist.

4. Verfahren nach Anspruch 3, wobei der Dampf in den Aufwärmer durch ein erstes Rohr eingeführt wird und die Entüberhitzungsanlage über ein zweites Rohr mit dem ersten Rohr verbunden ist.

5. Verfahren nach einem der Ansprüche 1 bis 4, wobei die organischen Verunreinigungen Ketone, Ketoxime, Carbonsäuren, Alkohole, Aldehyde, Ester, Amine und Kohlenwasserstoffe umfassen.

6. Verfahren nach einem der Ansprüche 1 bis 5, wobei die anorganische Verarbeitungslösung Phosphatsalze, Hydroxylamin und Wasser enthält.

7. Verfahren nach einem der Ansprüche 1 bis 6, wobei der Gesamtkohlenstoffgehalt in der dampfgestrippten anorganischen Verarbeitungslösung, die im Hydroxylamin-Oxim-Rückführsystem verwendet wird, auf die Gesamtmenge von anorganischer Phosphatverarbeitungslösung gezogen, nicht mehr als 0,03 Gew.-% (300 ppm) beträgt.

8. Verwendung einer Dampfstippvorrichtung für eine anorganische Verarbeitungslösung, umfassend:
eine Damfstrippanlage (A) zum Dampfstrippen der anorganischen Verarbeitungslösung, wobei die dampfgestrippte anorganische Verarbeitungslösung aus dem Boden der Damfstrippanlage strömt und unerwünschte organische Substanzen oben aus der Dampfstrippanlage ausgestoßen werden;
eine Wärmeaustauschanlage (B), die mit der Damfstrippanlage verbunden ist, wobei die Wärmeaustauschanlage (B) zum Erwärmen der anorganischen Verarbeitungslösung verwendet wird, die in die Damfstrippanlage (A) durch einen Dampf eingeführt wird, der in die Wärmeaustauschanlage eingespeist wird; und
eine Entüberhitzungsanlage (C), die zum Sprühen einer Kühlflüssigkeit durch eine Düse verwendet wird, um eine Temperatur des Dampfs, wenn er überhitzt wird, zu reduzieren, bevor der Dampf in die Wärmeaustauschanlage (B), ein Einlassblockventil (102), ein Y-Filter (104), einen Strömungsanzeiger (106), ein Blockventil (108), einen Druckanzeiger (110), ein Blockventil (112) und ein Auslassventil (114) eingespeist wird, die in der Entüberhitzungsanlage enthalten sind, zum Hindurchführen durch die Kühlflüssigkeit, und wobei die Entüberhitzungsanlage (C) am Dampfeinlass der Wärmeaustauschanlage angeordnet ist und das Auslassventil (114) mit einem Rohr verbunden ist, das von dem Rohr abzweigt, das das Einlassblockventil (102) und das Y-Filter (104) verbindet,
zum Entfernen organischer Verunreinigungen von einer anorganischen Verarbeitungslösung, die in einem Rückführsystem zum Herstellen von Hydroxylamin-Oxim verwendet werden soll.

## Revendications

1. Procédé de retrait de contaminants organiques d'une solution de traitement inorganique, comprenant l'étape consistant à soumettre la solution de traitement inorganique contenant les contaminants organiques à un dispositif d'extraction à la vapeur pour une solution de traitement inorganique, comprenant :
une unité d'extraction à la vapeur (A) servant à extraire à la vapeur la solution de traitement inorganique, la solution de traitement inorganique extraite à la vapeur sortant par le bas de l'unité d'extraction à la vapeur et les matières organiques indésirables étant expulsées par le haut de l'unité d'extraction à la vapeur ;
une unité d'échange de chaleur (B) couplée à l'unité d'extraction à la vapeur (A), l'unité d'échange de chaleur étant utilisée pour chauffer la solution de traitement inorganique introduite dans l'unité d'extraction à la vapeur au moyen d'une vapeur d'eau introduite dans l'unité d'échange de chaleur ; et
une unité de désurchauffe (C) qui est utilisée pour pulvériser un liquide de refroidissement par une buse afin de réduire la température de la vapeur d'eau lorsqu'elle est surchauffée avant que la vapeur d'eau soit introduite dans l'unité d'échange de chaleur, le liquide de refroidissement passant par une vanne de sectionnement d'admission (102), un filtre en Y (104), un indicateur de débit (106), une vanne de sectionnement (108), un indicateur de pression (110), une vanne de sectionnement (112) et une vanne de décharge (114) contenus dans l'unité de désurchauffe (C), l'unité de désurchauffe (C) étant disposée à l'entrée de vapeur d'eau de l'unité d'échange de chaleur (B) et la vanne de décharge (114) étant reliée à un tuyau piqué sur le tuyau reliant la vanne de sectionnement d'admission (102) et le filtre en Y (104),
afin d'obtenir une solution de traitement inorganique extraite, et réutiliser par la suite la solution de traitement inorganique extraite, la solution de traitement inorganique étant utilisée dans un système de recyclage servant à produire de l'hydroxylamine-oxime.

2. Procédé selon la revendication 1, dans lequel l'unité d'extraction à la vapeur est une tour d'extraction à la vapeur.

3. Procédé selon l'une quelconque des revendications 1 et 2, dans lequel l'unité d'échange de chaleur est un rebouilleur.

4. Procédé selon la revendication 3, dans lequel la vapeur d'eau est introduite dans le rebouilleur par un premier tuyau, et l'unité de désurchauffe est reliée par un deuxième tuyau au premier tuyau.

5. Procédé selon l'une quelconque des revendications 1 à 4, dans lequel les contaminants organiques comprennent des cétones, des cétoximes, des acides carboxyliques, des alcools, des aldéhydes, des esters, des amines et des hydrocarbures.

6. Procédé selon l'une quelconque des revendications 1 à 5, dans lequel la solution de traitement inorganique contient des sels de phosphate, de l'hydroxylamine et de l'eau.

7. Procédé selon l'une quelconque des revendications 1 à 6, dans lequel la teneur totale en carbone dans la solution de traitement inorganique extraite à la vapeur utilisée dans le système de recyclage d'hydroxylamine-oxime, rapportée à la quantité totale de solution de traitement inorganique aux phosphates, ne dépasse pas 0,03 % en poids (300 ppm).

8. Utilisation d'un dispositif d'extraction à la vapeur pour une solution de traitement inorganique, comprenant :
une unité d'extraction à la vapeur (A) servant à extraire à la vapeur la solution de traitement inorganique, la solution de traitement inorganique extraite à la vapeur sortant par le bas de l'unité d'extraction à la vapeur et les matières organiques indésirables étant expulsées par le haut de l'unité d'extraction à la vapeur ;
une unité d'échange de chaleur (B) couplée à l'unité d'extraction à la vapeur, l'unité d'échange de chaleur (B) étant utilisée pour chauffer la solution de traitement inorganique introduite dans l'unité d'extraction à la vapeur (A) au moyen d'une vapeur d'eau introduite dans l'unité d'échange de chaleur ; et
une unité de désurchauffe (C) qui est utilisée pour pulvériser un liquide de refroidissement par une buse afin de réduire la température de la vapeur d'eau lorsqu'elle est surchauffée avant que la vapeur d'eau soit introduite dans l'unité d'échange de chaleur (B), une vanne de sectionnement d'admission (102), un filtre en Y (104), un indicateur de débit (106), une vanne de sectionnement (108), un indicateur de pression (110), une vanne de sectionnement (112) et une vanne de décharge (114) étant contenus dans l'unité de désurchauffe pour y faire passer le liquide de refroidissement, l'unité de désurchauffe (C) étant disposée à l'entrée de vapeur d'eau de l'unité d'échange de chaleur et la vanne de décharge (114) étant reliée à un tuyau piqué sur le tuyau reliant la vanne de sectionnement d'admission (102) et le filtre en Y (104), pour le retrait de contaminants organiques d'une solution de traitement inorganique à utiliser dans un système de recyclage servant à produire de l'hydroxylamine-oxime.
